Europäisches Patentamt

(19) European Patent Office

Office européen des brevets

(11) Publication number: **0 314 632 B1**

# (12) EUROPEAN PATENT SPECIFICATION

(45) Date of publication of patent specification :
**15.05.91 Bulletin 91/20**

(51) Int. Cl.⁵ : **B65G 49/06, B66C 17/04, C03B 33/02**

(21) Application number : **88830332.8**

(22) Date of filing : **29.07.88**

(54) Apparatus for handling sheets of glass or other materials and to be used in lines for the cutting and working of said sheets.

(30) Priority : **26.08.87 IT 4010287**

(43) Date of publication of application :
**03.05.89 Bulletin 89/18**

(45) Publication of the grant of the patent :
**15.05.91 Bulletin 91/20**

(84) Designated Contracting States :
**AT BE CH DE ES FR GB GR IT LI LU NL SE**

(56) References cited :
**DE-A- 2 009 131**
**FR-A- 756 720**
**FR-A- 2 186 977**
**US-A- 2 021 183**

(56) References cited :
**US-A- 2 049 850**
**US-A- 3 033 382**
**US-A- 3 104 016**
**US-A- 3 485 425**

(73) Proprietor : **COOPMES s.c. a.r.l.**
**Via dell'Agricoltura, 20**
**I-41038 San Felice su Panaro (IT)**

(72) Inventor : **Emer, Ricchetti**
**Via Resistenza No. 50**
**I-41100 Modena (IT)**

(74) Representative : **Fiammenghi-Domenighetti, Delfina et al**
**Fiammenghi-Fiammenghi Via Quattro Fontane 31**
**I-00184 Roma (IT)**

## Description

The invention relates to an apparatus for handling sheets or plates of glass or other material in a line for the cutting or working thereof, according to the preamble of claim 1. Such an apparatus is known US-A-3485425. The apparatus is intended to be supported by means of a truck, slidably mounted on rail-beams of an overhead traveling crane and designed to allow to take up sheets or plates of glass or other laminar materials, such as panels of shavings or of compensated plywood or of insulating material, metal plates and the like ; which have to be cut in predetermined sizes and treated in any way, in working lines according to a continuous cycle and along which an overhead traveling crane operates.

This apparatus permits to grip a sheet or plate, taken off from one of a plurality of support means of the type, generally called "pallets", which are placed in a store area ; to transfer said sheet up to the cutting station of the working line, causing said sheet to be rotated about a horizontal axis through an angle of nearly 360°, and, when it is necessary, also about a vertical axis.

According to the present technique, it is a common practice to arrange, before the line for the cutting of sheets or plates, panels or the like, a limited number of supporting devices of the kind, called "pallets", upon each of these latter sheets or plates are mounted having different sizes, and/or thickness from a pallet to the other, from one of said pallets is thus possible to take off the sheet or plate of the desired type by means of a portal-like carriage carrying an orientable frame of plate, provided with sucking means on one of its main surfaces, in order to permit to deposit said sheet then on the plane of the charging table of the cutting and working line.

These known means have the following disadvantages :
– they limit the varieties of the sheets or plates which have to be readly handled by means of the portal-like carriage, to the number of the pallets previously aligned with the cutting machine ;
– they occupy a great space ;
– they do not permit to cut sheets or plates of such sizes and/or thicknesses, which are not present on the pallets located in the supplying or charging station ;
– in order to permit the cutting of sheets or plates, which are not present on the pallets provided in the supplying area, it is necessary to employ other transport devices and other workers so as to be able to take them from the store area and to transfer these sheets or plates on the available pallets so as to bring then these ones in an aligned position with the bench, before the beginning of the cutting or the sectioning of the machine.

US-A-3 485 425 is also known that concerns a method of, and an apparatus for conveying a continuous ribbon-like glass sheet or a large glass sheet by a first conveyor and carrying forward by a second conveyor in branching from said first conveyor glass plates obtained by cracking-off the said continuous glass sheet in combination of various sizes, which have to be carried out forward on the second conveyor or conveyors and subsequently taking off the thus cracked-off glass plates by means of loading machines from said second conveyor or conveyors automatically and separately according to their sizes. The or each of the loading machines of this apparatus are mounted and supported by an overheaded travelling crane which runs along the first conveyor and which supports rails, perpendicular to the travel direction of the crane. Along said rails can slide a truck that supportes a movable frame which forms the supporting structure of the loading machine.

At the lower end portion of said movable frame a carrying frame is mounted that is provided with a plurality of absorbers, actuated by a vacuum source, and to be used in conformity with the size of the glass plate to be handled. Said carrying frame can be caused to rotate only through an angle of less than 90°, about a horizontal axis parallel to the travel direction of the crane. According to the intended purposes of the loading machines, the apparatus required a considerable number of loading machines which can accomplish only a very limited rotary movement of each glass plates which have to be handled, and only about an axis parallel to the crane travel direction.

It is an object of the present invention the provision of an apparatus which can be applied to the common overhead traveling cranes which are, in practice, in use in any plant, in particular, in any glasswork, and, by means of which it is possible to draw sheets or plates to be treated in any zone of the store area and then to transfer these latter directly on the plane of the cutting table of said cutting line, thus needing no more the charging table of the already known working lines of said sheets or plates.

Therefore, it will be now possible to take off the sheets or plates, successively, according to any predetermined program, so as to optimize the daily work.

In fact, an optimized program for a daily work can provide the necessity of cutting sheets or plates of different sizes and/or thicknesses, and/or types of material quality, as glass, for instance, said sheets or plates being placed, according to the respective sizes, types and thicknesses, necessarily, in different zones of the store area. Therefore, when in the working line a sheet or plate is being cut, by means of the overhead traveling crane the subsequent sheet or plate can be taken, anywhere this latter may be placed.

Furthermore, in the store area the pallets can be arranged near each other, since by using the apparatus in question – which is carried by the overhead traveling crane, no driveway for the transit of carriage or support shunter is no more necessary, since the sheets or plates are taken off or gripped from above. Therefore the distance from a pallet to the other can be as short as possible, i.e. only apt to permit the room cleaning. Thus, as far as equal areas are considered, and when the number of pallets, now provided and rationally distributed in a glasswork is compared, with the use of number of pallets which can be inserted, using the apparatus which is the object of the present invention, in this last case the pallet number can be increased up to the 20%.

The overhead traveling crane, – along the railbeam or beams of which said apparatus can slide owing to the respective support truck, – can be controlled by a sole person, who, according to a predetermined program, can control the gripping off of every single sheet or plate then causing this latter to be brought on the cutting table. The whole handling operation can be also computerized and automatized, by applying transducers and/or encoders on the railbeams and/or the carriages of the overhead traveling crane. In such a way it is possible : to operate, according to a data-processing system, loading and unloading of the store room as well as to handle the sheets or plates according to the optimal cutting program, taking in due consideration the orders to be fulfilled according to the store availability.

The apparatus of the present invention brings about a true revolution in the management manner of the store room as well as of the orders to be fulfilled, since it allows the greatest flexibility of the work program, to be effected. Not only the internal transports are concerned, as far as the storing of the fresh supplied sheets or plates as well as the set up of those which are to be discharged, but, especially, the handling of the sheets or plates from the store area to the working, sectioning or the like lines, represents the constant spur, especially in all the glassworks or the like, due to the direct incidence that they have on the working costs, on the work and safety conditions of the workmen, on the productivity, on the utilisation of the available area and plants, as well as on the technical level of the manufacturing concerned. By using the apparatus, which is the object of the present invention, it will be no more necessary to transfer pallets or sheet or plate packs from a store zone to another and to transport these latter near the working lines.

The handling operation is entirely aerial, sheet by sheet, and, according the sequence of the type, size and thickness required for any daily program.

In the store station, the sheet or plate of a given type, size and thickness occupies always the same place and is housed on the same pallet so that the data-processing center or the manual operator knows, where it can be found.

By the use of the apparatus, which is object of the present invention, can be obtained :

– the automatic management of the store room ;
– the automated integration between the store management and the working program in the cutting line and other working lines ;
– the rational utilization of the available area ; and
– the reduction of the costs and attendants.

According to the present invention, said purposes are achieved by means of an apparatus as defined in claim 1.

The characteristics and the advantages of the invention will be better understood by reading the following description, reference being made to the accompanying drawings, given merely be way of example, and in which :

Figure 1 shows a diagramm top view of a sheet or plate cutting line which comprises already known sheet working devices in said line several sheet-supporting pallets and the carrying portal-like carriage being included for the handling of said sheets or plates ;

Figure 2 is a diagrammatic cross section of Figure 1 taken on the plane Z-Z, perpendicular to the direction of the working line, indicated by the arrow F1 ;

Figure 3 shows diagrammatically, – in an enlarged scale and in a cross section perpendicular to the direction F1 of the working line of Figure 7, – the apparatus of the present invention applied to an overhead traveling crane (only partially represented), said apparatus being shown in the position of drawing off a sheet or plate from a store pallet having one housing seat, and which is positioned near a pallet having two sheet housing seats ;

Figure 4 shows, in enlarged scale, a detail of Figure 3 and, in particular, the means provided to connect a chain to the frame or table carrying the sheet ;

Figure 5 shows the apparatus of Figure 3, when a sheet or plate is being placed on the engraving table of the cutting lines ;

Figure 6 shows, in particular, a partial view of the overhead traveling crane as well as the view of the apparatus as seen from the outside of this latter but when the sheet carrying plate or frame is in horizontal position, said view being taken from the plane W-W of Figure 5 ;

Figure 7 is a diagrammatic top view, in which the disposition of the pallets for the sheets in the store area is shown as well as the working line operating in combination with an overhead traveling crane on which the apparatus is mounted and which is the object of the present invention ; and

Figure 8 shows a variant of the connection system of the truck, that carries the telescopic support device with the interposition of a center plate apt to allow the sheet-carrying frame to rotate about a vertical axis Y-Y of the apparatus.

In the different Figures the same alphanumeric references indicate the same parts and elements.

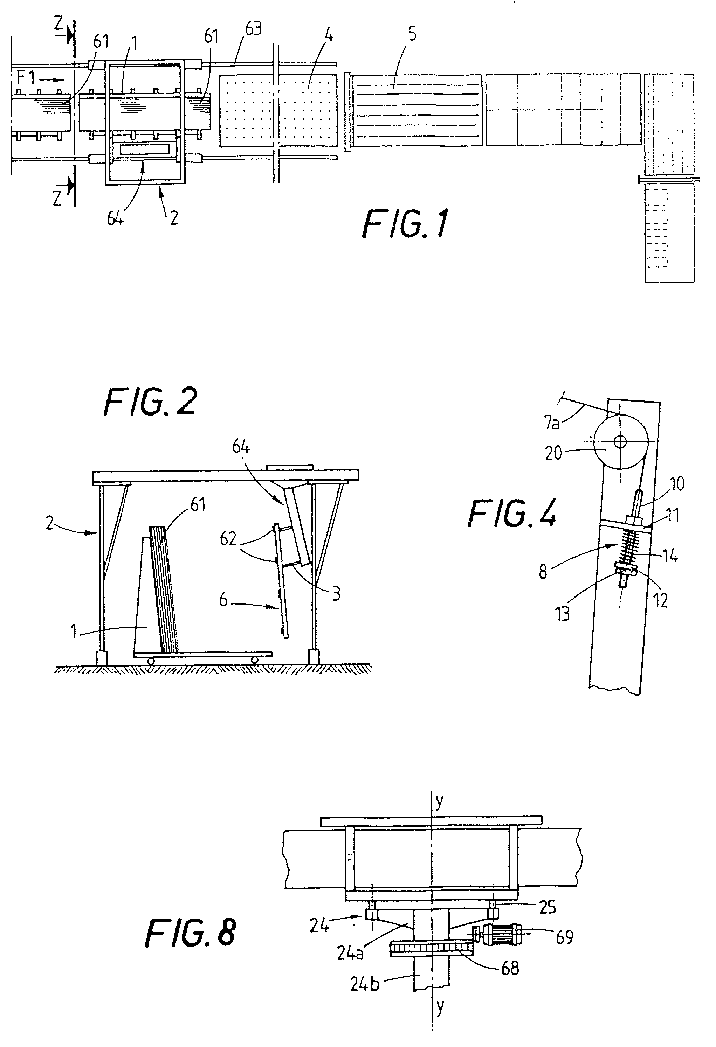

Now referring to Figures 1 and 2, – which concern a working line of a known type, – at 1 is indicated a pallet of the type provided with a sole housing seat, i.e. designed to house one plurality of sheets of plates 61 having given thickness or sizes, said pallet 1 being mounted on any suitable transport means ; per sé known. At the beginning of the working line a portal-like carriage, generally indicated 2 is slidably mounted on the rails 63 ; on said carriage a well known device, generally marked 64, is sidely mounted so as to face the sheets or plates 61 carried by a pallet 1 ; this device supports a frame 6, already "per sé" known, which is provided, – on the surface facing the sheets or plates 61 ; with a plurality of sucking devices 62 apt to grip, hold then release a sheet or plate 61, said frame being associated with known means 3 (Figure 2) which permit to cause this sheet or plate to be rotated through an angle less than 90°, so as to permit to draw said sheet or plate from the pallet 1 and then let it place in a horizontal position on the charging or supplying table 4, by means of the travel of the portal-like carriage 2 along the track 63, said sheet or plate being then caused to pass on the table, where the cutting lines are engraved, as it is necessary for the subsequent preparation and cutting-off in sub-sheets or sub-plates of predetermined sizes thereof.

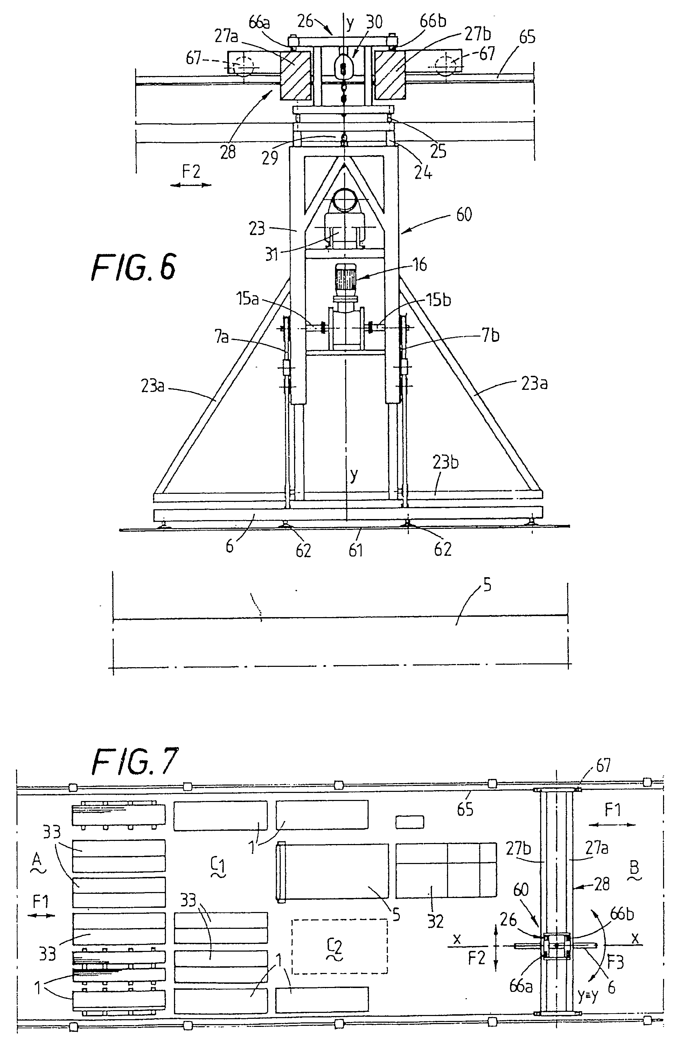

As has been above said, said working line is "per sé" substantially known, but it is greatly semplified by the use of the apparatus, generally marked 60, which is the object of this invention, and which is carried by an overhead traveling crane, generally marked 28 and that comprises a pair of transversal rails 27a, 27b (Figure 7) ; said traveling crane will be not described in its details, since it has "per sé" well known characteristics, and can travel, by means of its carriages 67, along the railway or track 65.

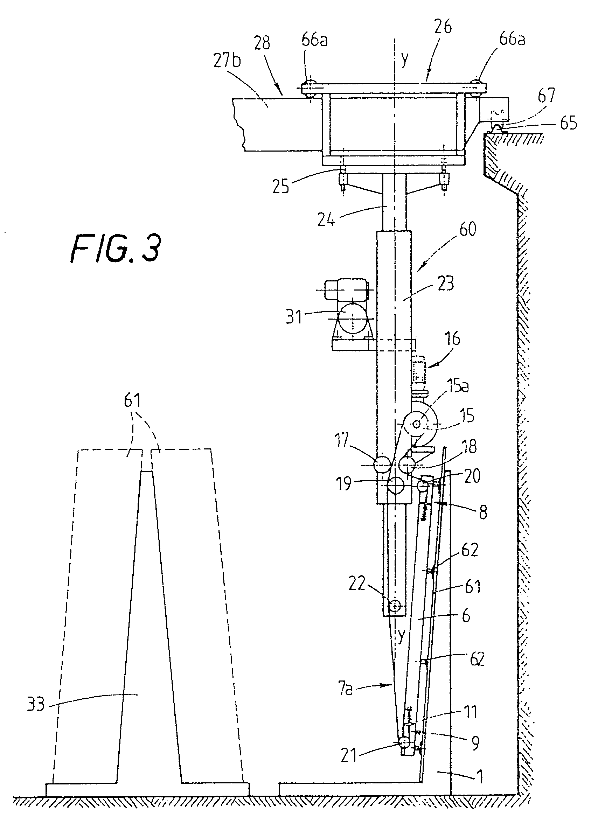

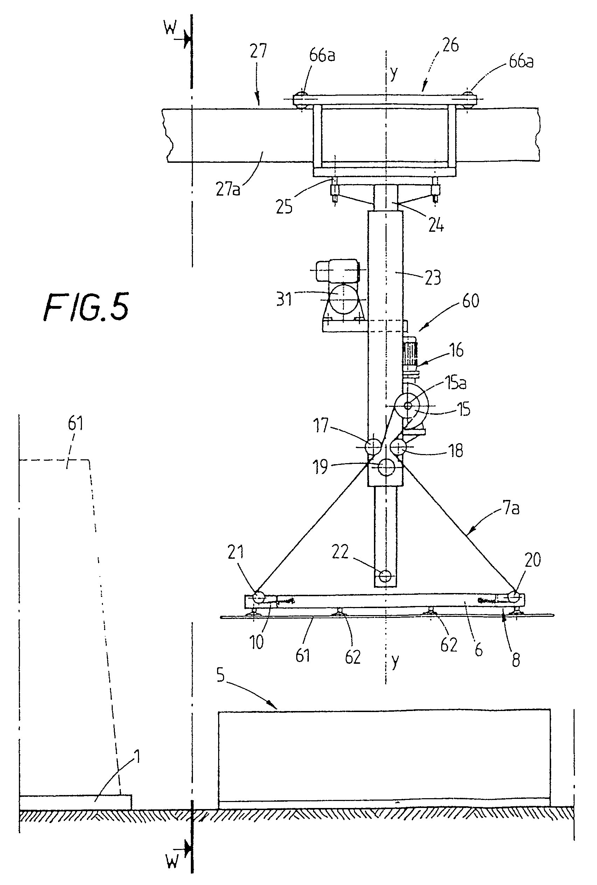

Now referring, more in particular, to Figures 3 and 4, in the apparatus 60 in question is present the frame or plate 6 of an already known type, provided with sucking devices 62 applied on one of its main surfaces.

But unlike the known frames 6 (Figures 1 and 2), which are used in order to draw off the sheets or plates 61, the frame 6, – which is a part of the apparatus 6, and is an object of the present invention, – is applied, carried and controlled by a particular system. In fact said frame 6 is suspended, at two of its opposite sides, to the end portions 8 and 9 of two chains 7a and 7b respectively. The ends 8 and 9 of each chain 7a and 7b (see the particular in enlarged scale of Figure 4) are connected thin to threaded shafts 10 axially slidable respectively into a hole arranged in a bracket 11 extending outwards from the respective side of the frame 6 on each of said shafts a washer 12 and a nut 13 being mounted. Between the respective washers 12 and the brackets 11 helical springs 14 are mounted for duly tensioning the chains 7a, 7b. Each chain 7a and 7b respectively meshes a toothed wheel 15 ; the toothed wheels 15 are keyed respectively on coaxial shafts 15a, 15b (Figure 6) which are caused to rotate by a geared motor 16.

A gear system comprising a suitable number of toothed idle guiding pinions 17, 18, 19, 20, 21 and 22, having axes, – parallel to the axis of the shafts 15a, 15b, – by letting the geared motor 16 rotate in a sense or in the opposite one, permits to vary the position of the frame 6, for instance, from the position, shown in Figure 3, to that shown in Figure 5 and also to cause the frame 6 to take a substantially opposite position with respect to that of Figure 3 ; in other words, the frame 6 can rotate alternatively, about a horizontal axis X-X (Figure 7), having the direction of the arrow F1, through an angle of nearly 360°.

The geared motor 16, the shafts 15a, 15b, the toothed wheels 15 as well as the pinions 17 to 19 are mounted on and carried near the lower end of a support framework 23 (see also Figure 6), that is guided on and can slide telescopically along an inner framework 24 which can be connected to a truck or carriage, generally marked 26 by means of adjustable tie rods 25 or other suitable devices, said truck sliding by means of pairs of wheels 66a-66a, and 66b-66b along parallel sliding rails 27a, 27b of the overhead traveling crane 28 (see Figure 3 and Figures 6, 7) that, in its turn, travels along the railway 65 by means of wheeled carriages 67.

In the shown embodiment the framework 23 (see Figure 6) is carried by the chain 29 of a hoist 30 hooked to the truck 26 and therefore :

– by the use of the hoist 30 the framework 23 may be moved up and down together with the frame 6 and the carrying and handling members 7a, 7b, 15, 16 ;

– by means of the truck 26 mounted on the railway or track 27a, 27b of the overhead traveling crane 28 and by means of said traveling crane, the whole apparatus 60 can be transferred towards any zone, on which overhead traveling crane 28 is designed to operate.

Of course, instead of a carrying hoist supporting the framework 23, other equivalent devices could be used. The framework 24, on which the framework 23 is mounted and guided, can slide vertically and it is connected to the truck 26 in an adjustable manner by means of the aforementioned threaded tie rods or screws 25, by the use of nuts and jam nuts. It becomes thus possible to carry out an adjustment in order to cause the axis of said framework 24 to become substantially vertical (perpendicular to the running direction F2 of the truck or carriage 26 and to the travel direction F1 of the overhead traveling crane 28).

The framework 23 comprises two parallel side members constituted of the bars 23a-23b, 23a-23b only one of said side members 23a, 23b, 23a can be seen in Figure 6. The side bars 23a, 23a diverge downwards from one another so as to create side members so positioned as to face the cutting bench 5 in order to limit any swinging movement of the frame 6. The framework 23 carries also a known vacuum pump 31, connected by flexible pipes (not shown in the drawings), to the sucking devices 62, applied to the frame 6, according to the known techniques, said sucking devices allowing to draw off one of the sheets or plates 61 made of glass or other laminar material from any pallet 1 or 33 up to bring it to rest on the engraving table 5 of the cutting line.

The illustrated and decribed embodiment of the apparatus is not the sole possible one.

Thus, such an apparatus 60, according to the invention could be entirely automated and programmable by means of computers.

In the same way, the framework 24, at its upper part, can be separated – along a horizontal plane – in two parts 24a and 24b (Figure 8) connected to one another by a circular body center plate 68, by means of which a rotation about the axis Y-Y can be obtained and which is connected to a drive motor 69 and to a transducer enabling the whole assembly 24b, 23 to rotate with regard of the part 24a, – which is connected to the truck 26 in the direction of the arrow F3 of Figure 7, – that permitting to draw the sheets or plates from the support having one housing seat pallets 1 or from pallets 33 having two housing seats, anyhow they can be oriented in the store room (in particular also in the case in which they are oriented perpendicularly to each other).

Furthermore, by suitable special dimensional modifications, the apparatus 60 can be used in various industrial sectors, such, for instance, in sectors for :

– a sectioning or cutting operation of panels made of multiply wooden chips or the like in furniture manufactures ;
– the working of metal plates (furniture and electrical household appliance sectors, glazing of stainless steel plates, and so on. In other words, everywhere, sheets or panels have to be transferred in working lines these can be drawn off from (vertical or horizontal) pallets.

What has been above described is sufficient in order to understand in what manner the working is carried out, for instance, in a glasswork.

In particular, Figure 7 shows, in a top view, a glasswork area, which comprises :

– a reception zone A ;
– pallets 1 with single housing seats and pallets 33 with double housing seats arranged in the zone A (Figures 3 and 7) ;
– a cutting line comprising an engraving table 5 for engraving cutting lines and the cutting-off table 32 ;

– service zone C1 ;
– sheet turnover zone C2 ;
– packing and shipping zone B.

Along said working line an overhead traveling crane 28 operates which travels longitudinally along the railway or track 65 in both senses of the direction F1 by means of wheeled carriages 67 and that in its turn, supports a pair of guiding rails 27a, 27b, on which a truck 26 provided with wheels 66a, 66b can slide and which moved transversally in the direction of the arrow F2, and carries the whole aforementioned apparatus 60 together with the frame 6.

As one can see, the pallets 1 and 33 in the zone A are mounted very near each other so as to take the greatest possible advantage of the available area.

By using the apparatus 60, which is the object of the present invention, it will be possible : to draw off a sheet or plate (Figure 3) from any pallet 1 or 33 and to transfer said sheet in the zone C2, by means of the overhead travelling crane 28 carrying the apparatus 60 for the charging and turnover of said sheet ; to cause the frame 6 to rotate up to bring this latter in horizontal position (Figure 5) ; to let the apparatus 60 to come just over the sectioning table 5 : to bring the sheet or plate 61 suspended on the frame 6 to rest just on the plane of said table 5 ; and, meanwhile the cutting lines are engraved on the sheet or plate 61 and this latter is then transferred on the cutting-off table 32, the next sheet or plate to be cut can be drawn off from one of the pallets 1 or 33.

The auxiliary devices have been neither mentioned, nor shown and described, since they are well known and can be applied according to known techniques, as, for instance, the following devices :

– limit microswitches to limit the up and down strokes of the framework 23 ;
– limit microswitches to limit clockwise and counterclockwise rotations of the frame 6 ;
– limit microswitches for stopping the geared motor 16, when the frame 6 reaches its horizontal position (as shown in Figure 5) ;
– sensors or detecting devices, which, as the frame 6 is approaching the sheets or plates 61, – placed on one of the pallets 1 or 33, – at first cause the deceleration of the truck 26 and thence the stopping thereof ;
– sensors or detecting devices which co-operate in order to obtain a correct positioning of the perimetral edges of the frame 6 with respect of those of the sheets or plates 61 mounted on a pallet 1 or 33 ;
– sensors or detecting devices apt to let decrease the speed during the downstroke of the apparatus 60, as soon as the sheet or plate 61 approaches the cutting table 5, and to stop said downstroke as the sheet reaches said plane ; and
– other devices or means, if required, especially accident preventing devices, which can be necessary and which are known to any person skilled in the art.

## Claims

1. Apparatus (60) for handling sheets or plates (61) of glass or other material in a line for the cutting or working thereof, the apparatus (60) being suspended to an overhead traveling crane (28) which travels, by means of wheeled carriages (67), along a railway or track (65) extending along the cutting or working line in a direction (F1) and which comprises two horizontal rail-beams (27a, 27b) parallel to a direction (F2), which is perpendicular to the direction (F1), said rail-beams (27a, 27b) being designed to support and to permit sliding movements of a track or carriage (26) carrying the apparatus (60), the track or carriage (26) having wheels (66a, 66b) and supporting a vertical carrying structure of the apparatus (60) which comprises a frame (6) provided with sucking devices (62), which are associated with a vacuum pump (31), for permitting to grip, hold or release a sheet or plate (61), said handling system causing the frame (6) together with the sheet or plate (61) hanging thereon, to rotate about an axis (X-X) parallel to the travel direction (F1) of the overhead traveling crane (28), the apparatus being characterized in that it comprises :

- a vertical telescopic carrying device consisting of a vertical framework (24) connected at its upper end to the truck (26), and a vertical framework (23), that can slide vertically, by guiding means, along the framework (24) and provided with sliding counterguiding means, while at the lower portion of the framework (23) the elements of the handling system are mounted ;
- the handling system comprises a frame (6) which is hooked and suspended to the two end portions (8 and 9) of each of at least two chains (7a, 7b), said chains being driven by a geared motor (16) driving two coaxial shafts (15a, 15b) on which toothed wheels (15) are keyed around which chains (7a, 7b) pass, so as to cause the movements of the respective chains (7a, 7b), with the aid of guiding and return toothed pinions (17 to 22) having axes parallel to those of the shafts (15a, 15b), and a rotation of the frame (6) through an angle of about 360° about the horizontal axis (X-X) parallel to the travel direction (F1), and, if desired, also about the vertical axis (Y-Y).

2. Apparatus according to claim 1, wherein the frame (6) is hooked in at least four points, which are two by two diametrically opposite, at the end portions (8, 9) of the respective chains (7a, 7b) with the interposition of resilient adjustable tensioning means (10 to 14).

3. Apparatus according to claim 1, wherein each chain (7a, 7b) meshes a toothed driving wheel (15) so that the frame (6) can be carried in a suspended condition by the chains (7a, 7b), like the pan of a steelyard.

4. Apparatus according to claim 1, wherein the geared motor (16), the shafts (15a, 15b), the toothed guiding pinions (17 to 21), the chains (7a, 7b), as well as the frame (6) are carried by the framework (23).

5. Apparatus according to claim 1, wherein the framework (23) is so designed as to be guided and be able to slide vertically along the framework (24), so that it can be raised and lowered by a device, such as a hoist, hooked to the truck (26).

6. Apparatus according to claim 1, wherein the framework (24) is suspended to the truck (26) – which can travel along the rails (27a, 27b) of the overhead traveling crane (28) – by means of adjustable tie rods (25).

7. Apparatus according to claim 1, wherein the framework (24) is separated in two parts (24a, 24b), – near the upper end of it, – along a horizontal plane, said parts being connected to each other by a circular body center plate (68) apt to permit that the lower part (24b) together with what is supported by it, to rotate about the vertical axis (Y-Y), in the direction of the arrow (F3).

8. Apparatus according to claim 1, comprising : limit microswitches so located as to be able to act up and down as stroke limit means for the framework (23) and for the rotary movements of frame (6) ; sensors or detecting devices to decelerate at first and then to stop the down-stroke of the frame (6) and the travel of the truck (6), when the frame (6) is approaching the sheets or plates (61), or when a sheet or plate 61 approaches a working table (5).

## Ansprüche

1. Vorrichtung (60) zum Fördern von Tafeln oder Platten (61) aus Glas oder anderem Material in einer Linie zum Schneiden oder Bearbeiten derselben, welche Vorrichtung (60) an einem Laufkran (28) aufgehängt ist, welcher mit Hilfe von mit Laufrädern versehenen Fahrwerken (67) entlang eines sich entlang der Schneid- oder Bearbeitungslinie in einer Richtung (F1) erstreckenden Schienenweges (65) führt und welcher zwei horizontale, zu einer zur Richtung (F1) senkrechten Richtung (F2) parallele Laufschienenträger (27a, 27b) umfaßt, welche Laufschienenträger (27a, 27b) konstruiert sind, um Gleitbewegungen eines die Vorrichtung (60) tragenden Wagens (26) zu tragen und zuzulassen, welcher Wagen (26) Räder (66a, 66b) besitzt und eine vertikale Tragkonstruktion der Vorrichtung (60) trägt, welche einen Rahmen (6) umfaßt, der mit Saugvorrichtungen (62) versehen ist, welche einer Vakuumpumpe (31) zugeordnet sind, um das Ergreifen, Halten oder Loslassen einer Tafel oder Platte (61) zuzulassen, welches Fördersystem das Rotieren des Rahmens (6) zusammen mit der daran hängenden Tafel oder Platte (61) um eine Achse (X-X) parallel zur Fahrtrichtung (F1) des Laufkranes bewirkt, welche Vorrichtung dadurch gekennzeichnet ist, daß sie umfaßt :

    – eine vertikale Teleskoptragevorrichtung, welche aus einem an seinem oberen Ende mit dem Wagen (26) verbundenen vertikalen Rahmentragwerk (24) und einem vertikalen Rahmentragwerk (23) besteht, welches durch Führungsmittel entlang dem Rahmentragwerk (24) vertikal gleiten kann und mit einem gleitenden Gegenführungsmittel versehen ist, während am unteren Teil des Rahmentragwerkes (23) die Elemente des Fördersystems montiert sind ;

    – das Fördersystem umfaßt. einen Rahmen (6), der an den zwei Endabschnitten (8 und 9) jeder von zumindest zwei Ketten (7a, 7b) aufgehängt ist, wobei die Ketten von einem, zwei koaxiale Wellen (15a, 15b), auf denen Zahnräder (15), um die die Ketten (7a, 7b) laufen, aufgekeilt sind, antreibenden Getriebemotor (16) angetrieben werden, um Bewegungen der entsprechenden Ketten (7a, 7b) mit Hilfe von, zu den Wellen (15a, 15b) paralleler Achsen aufweisenden Leit- und Umlenkzahnrädern (17 bis 22) und eine Drehung des Rahmens (6) durch einen Winkel von etwa 360° um die zur Fahrrichtung (F1) parallele Horizontalachse (X-X) und, falls gewünscht, auch um die vertikale Achse (Y-Y), herbeizuführen.

2. Vorrichtung gemäß Anspruch 1, wobei der Rahmen (6) in zumindest vier Punkten, welche zwei und zwei einander diametral gegenüberliegen, an den Endabschnitten (8,9) der entsprechenden Ketten (7a, 7b) unter Zwischenschaltung von elastischen, einstellbaren Spannmitteln (10 bis 14) festgehakt ist.

3. Vorrichtung gemäß Anspruch 1, wobei jede Kette (7a, 7b) mit einem gezahnten Antriebsrad (15) in Eingriff steht, sodaß der Rahmen (6) in einem hängenden Zustand, ähnlich der Waagschale einer Laufgewichtswaage, von den Ketten (7a, 7b) getragen werden kann.

4. Vorrichtung gemäß Anspruch 1, wobei der Getriebemotor (16), die Wellen (15a, 15b), die Leitzahnräder (17 bis 21), die Ketten (7a, 7b) und auch der Rahmen (6) vom Rahmentragwerk (23) getragen werden.

5. Vorrichtung gemäß Anspruch 1, wobei das Rahmentragwerk (23) so konstruiert ist, daß es vertikal entlang dem Rahmentragwerk (24) geführt ist und gleiten kann, sodaß es durch eine am Wagen (26) festgehakte Vorrichtung, wie z.B. ein Hebezeug, gehoben und abgesenkt werden kann.

6. Vorrichtung gemäß Anspruch 1, wobei das Rahmentragwerk (24) am Wagen (26), welcher den Schienen (27a, 27b) des Laufkranes (28) entlangfahren kann, mittels verstellbarer Zugstangen (25) aufgehängt ist.

7. Vorrichtung gemäß Anspruch 1, wobei das Rahmentragwerk (24) nahe seinem oberen Ende, entlang einer horizontalen Ebene in zwei Teile (24a, 24b) geteilt ist, welche Teile untereinanderdurch eine Mittelplatte (68) mit kreisförmigem Körper verbunden sind, welche geeignet ist zuzulassen, daß der untere Teil (24b) zusammen mit dem, was von ihm getragen wird, um die vertikale Achse (Y-Y) in Richtung des Pfeiles (F3) rotiert.

8. Vorrichtung gemäß Anspruch 1 mit Begrenzungsmikroschaltern, die so angeordnet sind, daß sie hinauf und hinunter als Hubbegrenzungsmittel für das Rahmentragwerk (23) und für die Drehbewegungen des Rahmens (6) wirken können ; mit Sensoren oder Feststellungsmitteln, um den Abwärtshub des Rahmens (6) und die Fahrt des Wagen zuerst zu verzögern und dann zu stoppen, wenn sich der Rahmen (6) den Tafeln oder Platten (61) nähert, oder wenn sich eine Tafel oder Platte (61) einem Werktisch (5) nähert.

## Revendications

1. Appareil (60) pour manipuler des feuilles ou plaques (61) de verre ou d'autre matériau dans une ligne de coupage ou de façonnage de celles-ci, l'appareil (60) étant suspendu à un pont-grue (28) qui se déplace, au moyen de chariots à roues (67), le long d'une voie ou chemin (65) s'étendant le long de la ligne de coupage ou de façonnage dans une direction (F1), et qui comprend deux poutres horizontales formant rails (27a, 27b) disposées parallélement à une direction (F2) qui est perpendiculaire à la direction (F1), lesdites poutres formant rails (27a, 27b) étant conçues pour supporter un chariot (26) portant l'appareil (60) et pour permettre les déplacements coulissants de celui-ci, le chariot (26) comportant des roues (66a, 66b) et supportant une structure porteuse verticale de l'appareil (60) qui comprend un châssis (6) équipé de dispositifs d'aspiration (62) qui sont associés à une pompe à vide (31), pour permettre de saisir, maintenir ou relâcher une feuille ou plaque (61), ledit système de manipulation faisant tourner le châssis (6), avec la feuille ou plaque qui lui est suspendue, autour d'un axe (X-X) parallèle à la direction de déplacement (F1) du pont-grue (28), l'appareil étant caractérisé en ce qu'il comprend :

    – un dispositif porteur télescopique vertical constitué par un bâti vertical (24) relié à son extrémité supérieure au chariot (26), et par un bâti vertical (23) conçu pour coulisser verticalement, à l'aide de moyens de guidage,le long du bâti (24) et équipé de moyens complémentaires de guidage du coulissement, alors que les éléments du système de manipulation sont montés à la partie inférieure du bâti (23) ;

– le système de manipulation comprend un châssis (6) accroché et suspendu aux deux parties extrêmes (8 et 9) de chacune d'au moins deux chaînes (7a, 7b), lesdites chaînes étant entraînées par un moteur démultiplié (16) qui entraîne deux arbres coaxiaux (15a, 15b) sur lesquels sont clavetées des roues dentées (15) autour desquelles circulent les chaînes (7a, 7b), de façon à assurer les déplacements des chaînes respectives (7a, 7b), à l'aide de pignons dentés de guidage et de renvoi (17 à 22) ayant leurs axes parallèles à ceux des arbres (15a, 15b), et une rotation du châssis (6) selon un angle d'environ 360° par rapport à l'axe horizontal (X-X) parallèle à la direction de déplacement (F1), ainsi que, si on le désire, autour de l'axe vertical (Y-Y).

2. Appareil selon la revendication 1, dans lequel le châssis (6) est accroché au moins en quatre points, qui sont diamétralement opposés deux à deux, aux parties extrêmes (8, 9) des chaînes respectives (7a, 7b) avec interposition de moyens tendeurs réglables élastiques (10 à 14).

3. Appareil selon la revendication 1, dans lequel chaque chaîne (7a, 7b) engrène avec une roue dentée menante (15) de façon que le châssis (6) puisse être porté en position suspendue par les chaînes (7a, 7b), à la façon du plateau d'un peson.

4. Appareil selon la revendication 1, dans lequel le moteur démultiplié (16), les arbres (15a, 15b), les pignons dentés de guidage (17 à 21), les chaînes (7a, 7b), ainsi que le châssis (6) sont portés par le bâti (23).

5. Appareil selon la revendication 1, dans lequel le bâti (23) est conçu pour être guidé et pouvoir coulisser verticalement le long du bâti (24), de sorte qu'il peut être monté et descendu par un dispositif, tel qu'un treuil, accroché au chariot (26).

6. Appareil selon la revendication 1, dans lequel le bâti (24) est suspendu au chariot (26) – qui peut se déplacer le long des rails (27a, 27b) du pont-grue (28) – au moyen de tirants réglables (25).

7. Appareil selon la revendication 1, dans lequel le bâti (24) est divisé en deux parties (24a, 24b) – au voisinage de son extrémité supérieure – le long d'un plan horizontal, lesdites parties étant reliées l'une à l'autre par une plaque centrale circulaire (68) pouvant permettre que la partie inférieure (24b), avec ce qu'elle porte, tourne autour de l'axe vertical (Y-Y) dans la direction de la flèche (F3).

8. Appareil selon la revendication 1, comprenant des micro-contacts de limitation placés de façon à pouvoir agir vers le haut et vers le bas comme limiteurs de course pour le bâti (23) et pour les mouvements rotatifs du châssis (6), des capteurs ou dispositifs de détection pour d'abord décélérer puis arrêter la course vers le bas du châssis (6) et le déplacement du chariot lorsque le châssis (6) s'approche des feuilles ou plaques (61), ou lorsqu'une feuille ou plaque (61) s'approche d'une table de façonnage (5).

*FIG.1*

*FIG.2*

*FIG.4*

*FIG.8*

FIG.3

# FIG.5

FIG.6

FIG.7